# EUROPEAN PATENT APPLICATION

(11) **EP 4 082 737 A1**
(43) Date of publication of application: **02.11.2022**
(21) Application number: 20908252.8
(22) Date of filing: 17.12.2020
(51) Int. Cl.: B28D 1/14, B23B 41/02, B23B 51/06

(54) **HIGH-SPEED HIGH-EFFICIENCY DRILL BIT**

(30) Priority: 24.12.2019 CN 201911348484; 24.12.2019 CN 201922348398 U
(71) Applicant: Guilin Champion Union Diamond Co., Ltd., Guilin, Guangxi 541004 (CN)
(72) Inventor: SONG, Jingxin, Guilin, Guangxi 541004 (CN); LONG, Huiling, Guilin, Guangxi 541004 (CN); LIANG, Anning, Guilin, Guangxi 541004 (CN); GUO, Xinling, Guilin, Guangxi 541004 (CN); YE, Yong, Guilin, Guangxi 541004 (CN); LIU, Renjie, Guilin, Guangxi 541004 (CN); WANG, Zhiyong, Guilin, Guangxi 541004 (CN)
(74) Representative: Zaboliene, Reda
(86) International application number: PCT/CN2020/137269
(87) International publication number: WO 2021/129512

(57) **Abstract**

The present invention relates to a high-speed and high-efficiency drill bit, which includes a work ring and a plurality of discharge ports. The work ring is a cylindrical structure, and the plurality of discharge ports is distributed annularly at the bottom of a sidewall of the work ring to discharge scraps when the work ring is rotated for machining. A symmetrical centerline of two side edges at the bottom of each discharge port or a centerline of an included angle between the two side edges at the bottom of the discharge port does not pass through a circle center of a bottom surface of the work ring. The high-speed and high-efficiency drill bit of the present invention has the following beneficial effects: while rotating with the work ring in the discharge ports, the scraps may be subject to a mechanical pushing force from the discharge ports towards an outer side of the work ring, which allows to discharge the scraps more easily out of the discharge ports under the mechanical pushing force, thereby ensuring the drill bit to work at a high speed and high efficiency.

## Description

### TECHNICAL FIELD

The present invention relates to the field of machining tools, in particular to a high-speed and high-efficiency drill bit.

### BACKGROUND

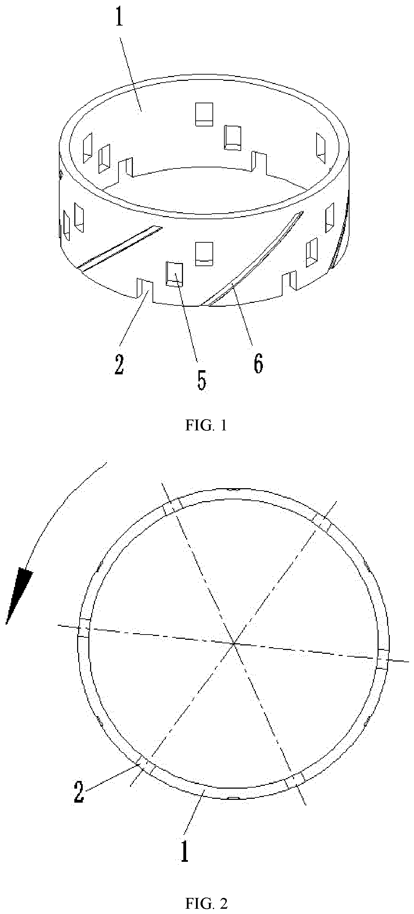

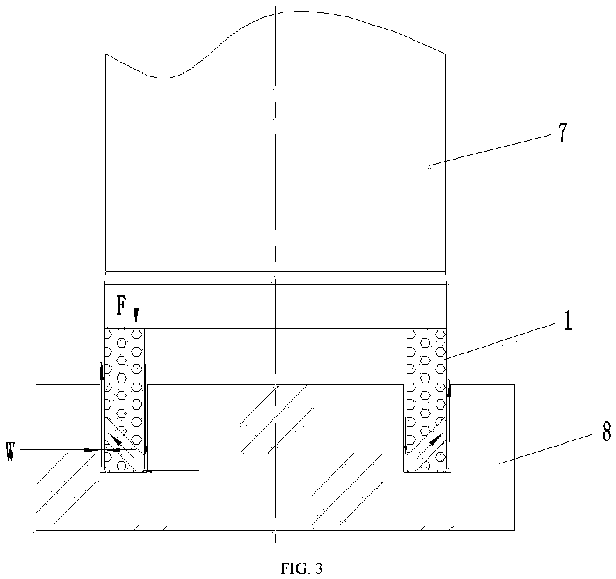

As shown in FIGs. 1-3, the existing drill bit includes a work ring 1 and a discharge port 2. The work ring 1 is fixed on a lower end of a substrate 7, and an abrasive material layer such as diamond particles is provided on a surface of the work ring 1. In addition, the wall thickness of the work ring 1 is greater than that of the substrate 7. During the machining, cooling water flows downwards between the inner wall of the work ring 1 and glass 8 (gaps formed among the diamond particles for the cooling water to flow) after being introduced into the substrate 7. Then, the cooling water flows outward from the lower end of the work ring 1, and is finally discharged upward again between the outer wall of the work ring 1 and the glass 8 (as shown by arrows in FIG. 3). During flowing of the cooling water, the cooling water carries debris generated by grinding to pass through the discharge port 2 and then throws out the debris via a discharge slot 6 and a gap between the outer wall of the work ring 1 and the glass 8. When the work ring 1 is rotated for machining, the discharge port 2 is configured to discharge the scraps (a mixture of the cooling water and the grinding scraps) to ensure normal operation of the machining.

A water inlet space is a gap W between the diamond particles on the work ring 1 and the glass, which is rather narrow. Thus, in order to ensure the normal machining, the water inflow or water pressure is generally increased to timely discharge the scraps generated by the machining. However, increasing the water inflow may cause a waste of water resources and increase the manufacturing cost, which is not conducive to environmental protection. Furthermore, increasing the water pressure may cause the glass to be chipped easily at the instant holes in the glass are drilled through, which is rather prominent while thin glass is machined.

In the existing drill bit, two side edges at the bottom of the discharge port 2 are provided in parallel, and a symmetrical centerline of the two side edges at the bottom of the discharge port 2 passes through a circle center of the bottom surface of the work ring 1. Under this configuration, when the work ring 1 is rotated at a high speed, the scraps are rotated in the discharge port 2 simultaneously with the work ring 1, and cannot be easily discharged to the outer side of the work ring 1 under a centrifugal force of the work ring 1, which further causes an operation failure of the drill bit at a high speed and high efficiency.

### SUMMARY

To sum up, the technical problem to be solved by the present invention is to provide a high-speed and high-efficiency drill bit, so as to overcome the deficiencies of the prior art.

A technical solution of the present invention for solving the technical problem is summarized as follows: a high-speed and high-efficiency drill bit includes a work ring and a plurality of discharge ports. The work ring is a cylindrical structure, and the plurality of discharge ports is distributed annularly at the bottom of a sidewall of the work ring to discharge scraps when the work ring is rotated for machining. A symmetrical centerline of two side edges at the bottom of the discharge port or a centerline of an included angle between the two side edges at the bottom of the discharge port does not pass through a circle center of a bottom surface of the work ring.

The high-speed and high-efficiency drill bit of the present invention has the following beneficial effects: while rotating with the work ring in the discharge ports, the scraps may be subject to a mechanical pushing force from the discharge ports towards an outer side of the work ring, which allows to discharge the scraps more easily out of the discharge ports under the mechanical pushing force, thereby ensuring the drill bit to work at a high speed and high efficiency.

The present invention may make the following improvements based on the aforesaid technical solution.

Further, the two side edges at the bottom of each discharge port are provided in parallel, and their symmetrical centerline does not pass through the circle center of the bottom surface of the work ring; and the two side edges at the bottom of the discharge port are arranged spirally with respect to the circle center of the bottom surface of the work ring, and a spiral direction is the same as a rotating direction of the work ring.

The beneficial effect of adopting the further solution is that the scraps can be discharged outwards along the discharge port under a centrifugal force generated by the rotation of the work ring, thereby increasing a scrap discharging speed.

Further, the two side edges at the bottom of each discharge port are sequentially a first side edge and a second side edge along a rotating direction of the work ring; a centerline of an included angle between the first side edge and the second side edge does not pass through the circle center of the bottom surface of the work ring; one end of the first side edge is located at a corresponding position of an inner sidewall of the work ring, and the other end of the first side edge is oriented towards the outer side of the work ring and deflected by an angle α to a direction opposite to the rotating direction of the work ring; and one end of the second side edge is located at a corresponding position of the inner sidewall of the work ring, and the other end of the second side edge is oriented towards the outer side of the work ring and deflected by an angle θ to the rotating direction of the work ring, α being greater than θ.

The beneficial effect of adopting the further solution is that the second side edge of the discharge port does not block the scraps pushed out by the first side edge when the work ring is rotated, thereby increasing the scrap discharging speed in a radial direction of the work ring.

Further, two side surfaces of each discharge port are provided in parallel, and the symmetrical centerline of the two side edges at the bottom of the discharge port does not pass through the circle center of the bottom surface of the work ring; the two side surfaces of the discharge port are inclined towards the rotating direction of the work ring relative to the bottom surface of the work ring; and one end of each of the two side surfaces of the discharge port is located at a corresponding position of the inner sidewall of the work ring, and the other end of each of the two side surfaces of the discharge port is oriented towards an outer side of the work ring and deflected by a preset angle to the rotating direction of the work ring.

The beneficial effect of adopting the further solution is that one of the two side surfaces of the discharge port forms an upward and outward pushing force on the scraps when the work ring is rotated, thereby increasing the scrap discharging speed in an axial direction of the work ring.

Further, the sidewall of the work ring is provided with standby discharge ports corresponding to the discharge ports, and each standby discharge port is disposed above the corresponding discharge port and configured to discharge scraps after axial abrasion of the work ring exceeds the discharge port.

The beneficial effect of adopting the further solution is that the work ring can machine normally even undergoing axial abrasion.

Further, each discharge port is a rounded structure at the top, and each standby discharge port has rounded structures at its both bottom and top.

The beneficial effect of adopting the further solution is to prevent stress concentration and facilitate the flow of cooling water and scraps.

Further, a plurality of discharge slots is provided uniformly in the outer sidewall of the work ring along a circumferential direction; and a lower end of each discharge slot extends to the bottom of the work ring, and an upper end of the discharge slot extends diagonally upwards.

Further, each discharge slot is in a spiral shape, and the spiral direction is the same as the rotating direction of the work ring.

The beneficial effect of adopting the further solution is to facilitate upward discharging of the scraps along the discharge slots.

Further, the discharge ports and the standby discharge ports are provided at corresponding positions in the discharge slots.

The beneficial effect of adopting the further solution is that the scraps discharged from the discharge ports can be discharged upwards in the first time via the discharge slots.

Further, two side surfaces of each of the discharge ports or the standby discharge ports are sequentially a first side surface and a second side surface respectively along the rotating direction of the work ring; two side surfaces of each of the discharge slots are sequentially a third side surface and a fourth side surface respectively along the rotating direction of the work ring; and the first side surface overlaps with the third side surface, and the second side surface is spaced from the fourth side surface.

The beneficial effect of adopting the further solution is that the cooling water flowing from the standby discharge ports has an optimum boosting effect on the discharging of the scraps in the discharge slots, thereby improving the discharge efficiency.

### BRIEF DESCRIPTION OF THE DRAWINGS

FIG. 1 is a three-dimensional view of an existing drill bit;
FIG. 2 is a bottom view of the existing drill bit;
FIG. 3 is a schematic diagram of water flow when the drill bit machines glass;
FIG. 4 is a three-dimensional view of Embodiment 1 of the present invention;
FIG. 5 is a bottom view of Embodiment 1 of the present invention;
FIG. 6 is a three-dimensional view of Embodiment 2 of the present invention;
FIG. 7 is a bottom view of Embodiment 2 of the present invention;
FIG. 8 is a schematic diagram of radial discharging of scraps according to Embodiment 2 of the present invention;
FIG. 9 is a schematic diagram of radial discharging of scraps from the existing drill bit;
FIG. 10 is a three-dimensional view of Embodiment 3 of the present invention;
FIG. 11 is a front view of Embodiment 3 of the present invention;
FIG. 12 is a bottom view of Embodiment 3 of the present invention;
FIG. 13 is a sectional view along A-A in FIG. 12;
FIG. 14 is a three-dimensional view of Embodiment 4 of the present invention;
FIG. 15 is a front view of Embodiment 4 of the present invention;
FIG. 16 is an enlarged view of the bottom of the work ring in Embodiment 2 of the present invention after the work ring has worked for a period of time; and
FIG. 17 is a schematic diagram of an angle α and an angle θ.

Dotted lines herein refer to a symmetrical centerline of two side edges at the bottom of each discharge port or a centerline of an included angle between the two side edges at the bottom of the discharge port; solid arrows refer to a rotating direction of the work ring; and dashed arrows refer to a discharging direction of scraps.

In the accompanying drawings, the components represented by respective references signs are listed as follows:

1-work ring; 2-discharge port; 3-first side edge; 4-second side edge; 5-standby discharge port; 6-discharge slot; 7-substrate; 8-glass; 9-first side surface; 10-second side surface; 11-third side surface; 12-fourth side surface.

### DETAILED DESCRIPTION

The principles and features of the present invention will be described below in conjunction with the accompanying drawings, and the examples given are intended to explain the present invention only and are not intended to limit the scope of the present invention.

### Embodiment 1

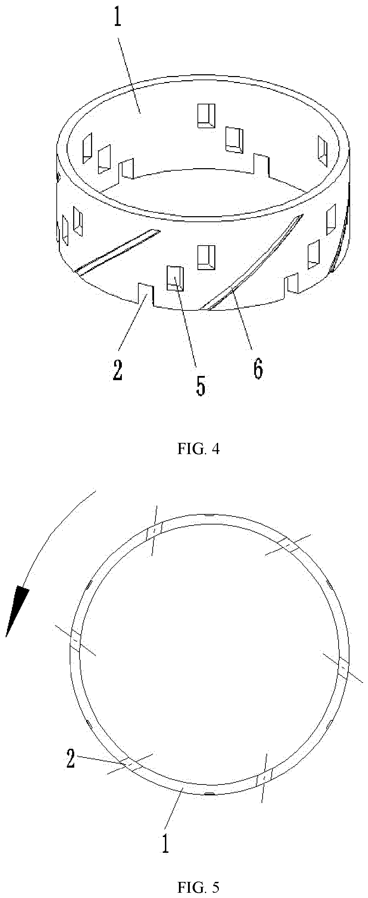

FIGs. 4 and 5 show a high-speed and high-efficiency drill bit, which includes a work ring 1 and a plurality of discharge ports 2. The work ring 1 is a cylindrical structure, and the plurality of discharge ports 2 is distributed annularly at the bottom of a sidewall of the work ring 1 to discharge scraps when the work ring 1 is rotated for machining. Two side edges at the bottom of each discharge port 2 are provided in parallel, and their symmetrical centerline does not pass through a circle center of the bottom surface of the work ring 1. Instead, the two side edges at the bottom of each discharge port 2 are arranged spirally with respect to the circle center of the bottom surface of the work ring 1, and the spiral direction is the same as a rotating direction of the work ring 1. In this example, the scraps may be discharged outwardly along the discharge ports 1 under a centrifugal force generated by the rotation of the work ring 1, which improves a scrap discharging speed and ensures the high-efficiency operation of the drill bit when the drill bit rotates at a high speed.

The sidewall of the work ring 1 is provided with standby discharge ports 5 corresponding to the discharge ports 2, and each standby discharge port 5 is located above the corresponding discharge port 2 and configured to discharge the scraps after axial abrasion of the work ring 1 exceeds the discharge port 2. With the continuous machining, the work ring 1 may be continuously abraded in the axial direction. When the abrasion reaches to a certain extent and namely exceeds the discharge ports 2, the standby discharge ports 5 at the second layer may become new discharge ports 2, each of which has the same structure as the initial discharge port 2. By analogy, the standby discharge ports 5 in the upper layer may be continuously formed as the new discharge ports 2 until the work ring 1 is abraded and loses the ability to work. A plurality of discharge slots 6 is provided uniformly in the outer sidewall of the work ring 1 along a circumferential direction; and a lower end of each discharge slot 6 extends to the bottom of the work ring 1, and an upper end of the discharge slot 6 extends diagonally upwards. Each discharge slot 6 is in a spiral shape, and the spiral direction is the same as the rotating direction of the work ring 1. The discharge slot 6 is designed such that the scraps can be discharged upward along the discharge slots 6, and the discharge ports 2 and the standby discharge ports 5 may be provided outside the discharge slots 6 or inside the discharge slots 6.

### Embodiment 2

This embodiment mainly changes the structure of the discharge ports 2, and the remaining portion of this embodiment is consistent with Embodiment 1.

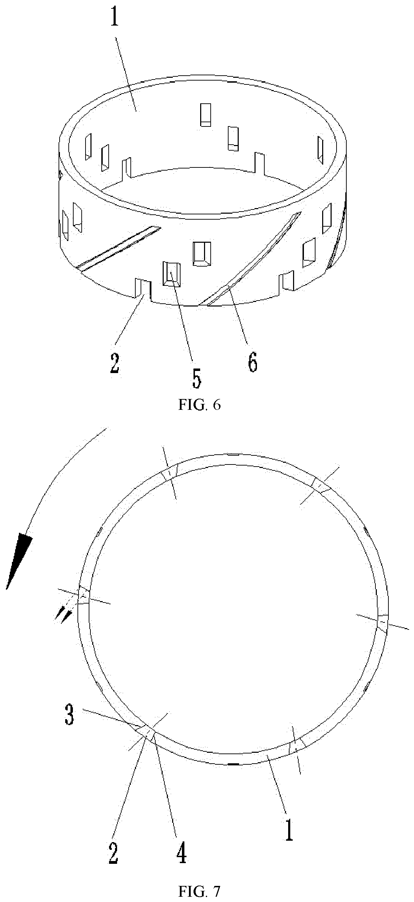

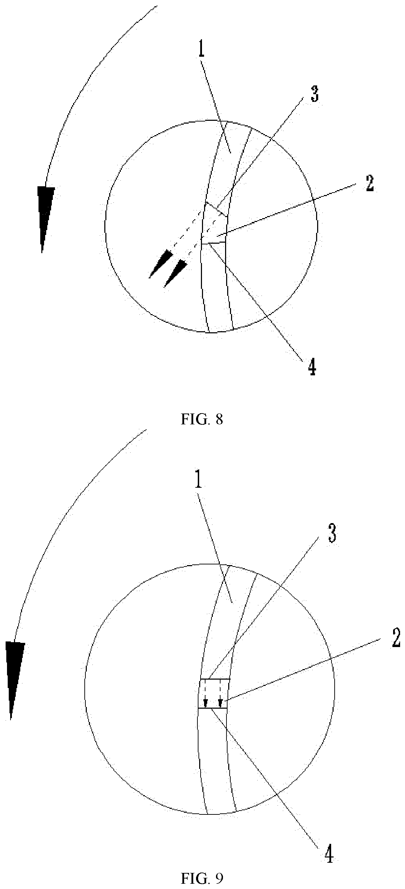

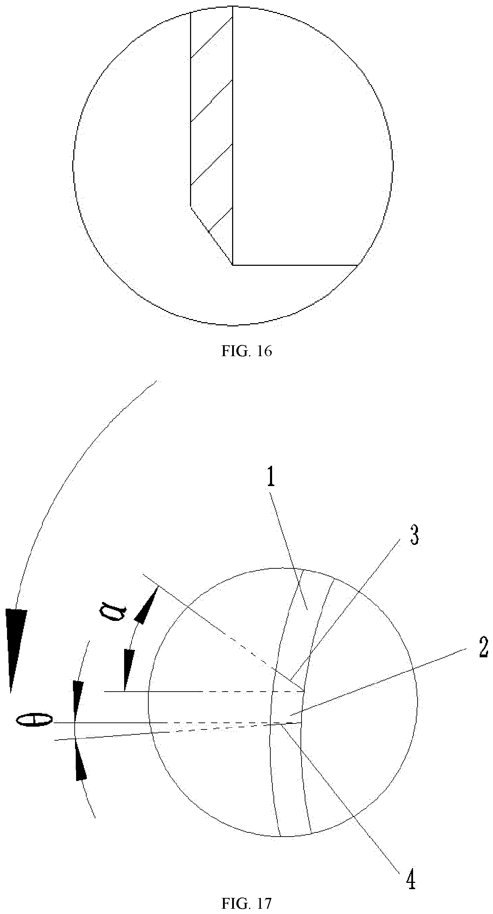

As shown in FIGs. 6 and 7, the two side edges at the bottom of each discharge port 2 are sequentially a first side edge 3 and a second side edge 4 along the rotating direction of the work ring 1, and a centerline of an included angle between the first side edge 3 and the second side edge 4 does not pass through the circle center of the bottom surface of the work ring 1. As shown in FIG. 17, one end of the first side edge 3 is located at a corresponding position of the inner sidewall of the work ring 1, and the other end of the first side edge 3 is oriented towards the outer side of the work ring 1 and deflected by an angle α to a direction opposite to the rotating direction of the work ring 1. One end of the second side edge 4 is located at a corresponding position of the inner sidewall of the work ring 1, and the other end of the second side edge 4 is oriented towards the outer side of the work ring 1 and deflected by an angle θ to the rotating direction of the work ring 1, α being greater than θ. In this embodiment, when the work ring 1 is rotated, the first side edge 3 of each discharge port 2 may form a radial mechanical pushing force under the rotation of the work ring 1, so as to push the scraps to the outer side of the work ring 1. Since the angle α of the first side edge 3 formed by deflecting opposite to the rotating direction of the work ring 1 is greater than the angle θ of the second side edge 4 formed by deflecting towards the rotating direction of the work ring 1, the second side edge 4 may not block the scraps pushed outward by the first side edge 3. As shown in FIG. 8, with the rotation of the work ring 1, the scraps are smoothly discharged along the radial direction of the work ring 1 under the mechanical pushing force of the first side edge 3. In the case of no such a design, the first side edge 3 and the second side edge 4 of each discharge port 2 may make no defection. As shown in FIG. 9, the second side edge 4 may block the scraps pushed outward by the first side edge 3 under the rotation of the work ring 1, thereby reducing the scrap discharging speed.

In addition, the first side edge 3 and the second side edge 4 under this design may enable a distance between their ends proximate to the inner side of the work ring 1 to be narrow and a distance between their ends proximate to the outer side of the work ring 1 to be wide. That is, a great deal of materials (diamonds) may be machined on the inner side of the work ring 1, and fewer materials may be machined on the outer side, which further causes the inner side of the work ring 1 to be abraded slower than the outer side. Therefore, after working for a certain period, a working end (bottom surface) of the work ring 1 may be correspondingly formed as a taper as shown in FIG. 16. When certain materials such as glass are machined, the inner side of the working end of the work ring 1 may touch the inner side of the surface of the glass firstly, which can effectively prevent the glass from chipping.

### Embodiment 3

This embodiment mainly changes the structure of the discharge ports 2, and the remaining portion of this embodiment is consistent with Embodiment 1.

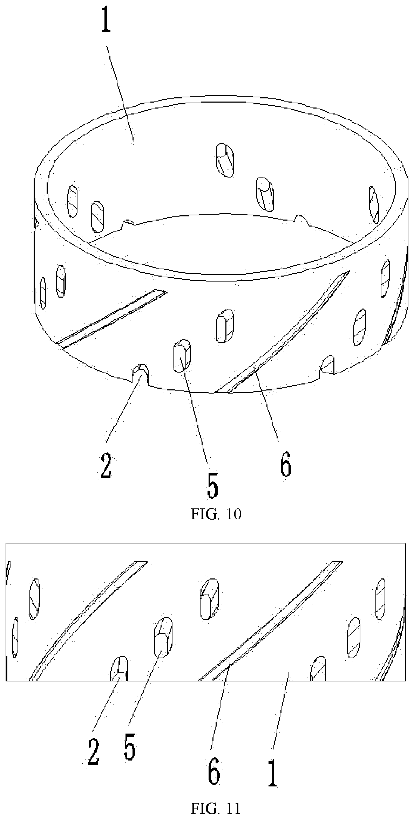

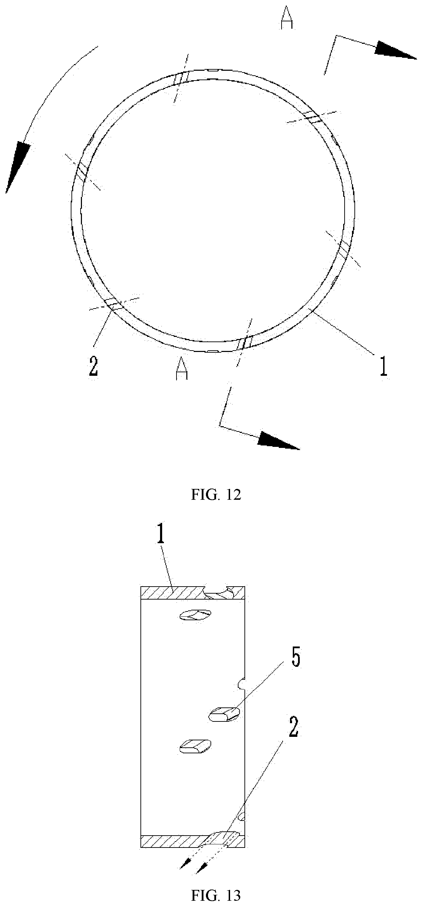

As shown in FIGs. 10-13, two side surfaces of each discharge port 2 are provided in parallel, and the symmetrical centerline of the two side edges at the bottom of the discharge port 2 do not pass through the circle center of the bottom surface of the work ring 1. The two side surfaces of each discharge port 2 are inclined towards the rotating direction of the work ring 1 relative to the bottom surface of the work ring 1; and one end of each of the two side surfaces of the discharge port 2 is located at a corresponding position of an inner sidewall of the work ring 1, and the other end of the side surface is oriented towards an outer side of the work ring 1 and deflected by a preset angle to the rotating direction of the work ring 1. Each discharge port 2 is a rounded structure at the top, and each standby discharge port 5 has rounded structures at its both bottom and top. The rounded structures can prevent the stress concentration and facilitate flowing of the scraps. In this embodiment, when the work ring 1 is rotated, the two side surfaces of the discharge port 2 may rotate with the work ring 1, wherein one side surface may push the scraps upward (axially upward) towards the outside (the outer side of the work ring 1), the two side surfaces are provided in parallel, and the other side surface may not block the one side surface from pushing out the scraps, thereby forming an axial mechanical pushing force to discharge the scraps. With the rotation of the work ring 1, the scraps are smoothly discharged along the axial direction (as shown by dashed arrows in FIG. 13) of the work ring 1 under the pushing of the two side surfaces of the discharge port 2.

### Embodiment 4

This embodiment mainly changes the position of each discharge port 2, and the structure of the discharge port 2 is consistent with that in Embodiment 1, Embodiment 2 or Embodiment 3, and the remaining portion is consistent with Embodiment 1.

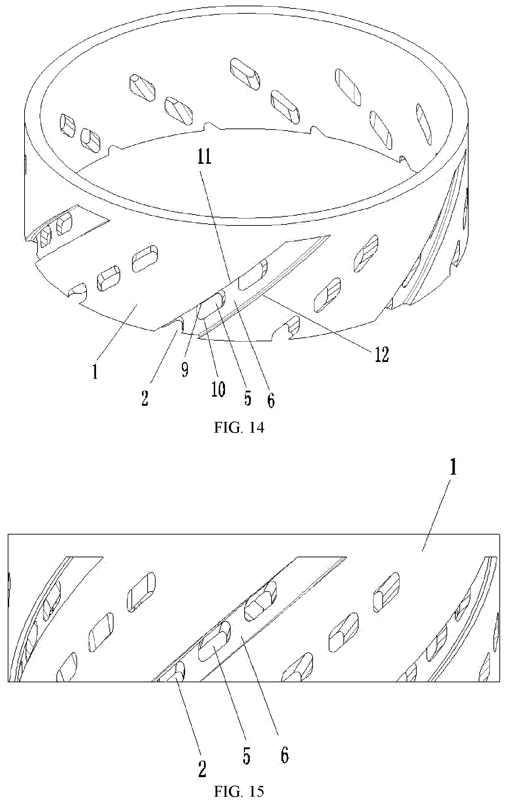

As shown in FIGs. 14 and 15, the sidewall of the work ring 1 is provided with standby discharge ports 5, and each standby discharge port 5 is located above the corresponding discharge port 2 and configured to discharge scraps after axial abrasion of the work ring 1 exceeds the discharge port 2. Each standby discharge port 5 has rounded structures at its both bottom and top, and the rounded structures may prevent the stress concentration and facilitate flowing and discharging of the scraps. A plurality of discharge slots 6 is provided uniformly in the outer sidewall of the work ring 1. Each discharge slot 6 is in a spiral shape, and the spiral direction is the same as the rotating direction of the work ring 1. The discharge slots 6 are designed such that the scraps can be discharged upward along the discharge slots 6, and the discharge ports 2 and the standby discharge ports 5 are provided inside the discharge slots 6. In this embodiment, the scraps discharged from the discharge ports 2 are discharged upward in the same time via the discharge slots 6, which can accelerate the scarp discharging speed.

Preferably, two side surfaces of each of the discharge ports 2 and the standby discharge ports 5 are sequentially a first side surface 9 and a second side surface 10 along the rotating direction of the work ring 1; and two side surfaces of each discharge slot 6 are sequentially a third side surface 11 and a fourth side surface 12 along the rotating direction of the work ring 1. The first side surface 9 overlaps with the third side surface 11, and the second side surface 10 is spaced from the fourth side surface 12. By configuring the first side surface 9 of the discharge port 2 to overlap with the third side surface 11 of the discharge slot 6, the scraps discharged from the discharge port 2 may move backward towards the fourth side surface 12 of the discharge slot 6 under the rotation of the work ring 1. In addition, by configuring the second side surface 10 of the discharge port 2 to be spaced from the fourth side surface 12, a maximum discharge space may be formed for the scraps, which enables the scraps to enter the discharge slots 6 at a higher speed and greater amount, thereby improving the scrap discharging efficiency. By configuring the first side surface 9 of the standby discharge port 5 to overlap with the third side surface 11 of the discharge slot 6, and configuring the second side surface 10 of the standby discharge port 5 to be spaced from the fourth side surface 12, a maximum discharge space may be formed for the cooling water, and the cooling water flowing out of the standby discharge port 5 (the cooling water may flow from the standby discharge port 5 to the outer side of the work ring 1 to assist the discharging when the work ring 1 is abraded and the standby discharge port 5 does not become the discharge port 2) has an optimum boosting effect on the discharging of the scraps in the discharge slot 6, which can also improve the discharging efficiency. For a case where the discharge port 2/standby discharge port 5 does not overlap with one side of the discharge slot 6, for example, the discharge port 2/standby discharge port 5 may be provided in the middle of the discharge slot 6 (the first side surface 9 and the second side surface 10 do overlap with the third side surface 11 and the fourth side surface 12), or the second side surface 10 may overlap with the fourth side surface 12. Under this case, a space formed between the second side surface 10 of the discharge port 2/standby discharge port 5 and the fourth side surface 12 of the discharge slot 6 for discharging the scraps and the cooling water is rather small, which fails to discharge the scraps quickly.

The above description is only the preferred embodiments of the present invention, and is not intended to limit the present invention. Any modification, equivalent replacement, improvement, etc. made according to the spirit and principle of the present invention shall be regarded as falling within the protection scope of the present invention.

## Claims

1. A high-speed and high-efficiency drill bit, comprising: a work ring (1) and a plurality of discharge ports (2), wherein the work ring (1) is a cylindrical structure, and the plurality of discharge ports (2) is distributed annularly at the bottom of a sidewall of the work ring (1) to discharge scraps when the work ring (1) is rotated for machining; and wherein a symmetrical centerline of two side edges at the bottom of each discharge port (2) or a centerline of an included angle between the two side edges at the bottom of the discharge port (2) does not pass through a circle center of a bottom surface of the work ring (1).

2. The high-speed and high-efficiency drill bit according to claim 1, wherein the two side edges at the bottom of the discharge port (2) are provided in parallel, and their symmetrical centerline does not pass through the circle center of the bottom surface of the work ring (1); and the two side edges at the bottom of the discharge port (2) are arranged spirally with respect to the circle center of the bottom surface of the work ring (1), and a spiral direction is the same as a rotating direction of the work ring (1).

3. The high-speed and high-efficiency drill bit according to claim 1, wherein the two side edges at the bottom of the discharge port (2) are sequentially a first side edge (3) and a second side edge (4) respectively along a rotating direction of the work ring (1); a centerline of an included angle between the first side edge (3) and the second side edge (4) does not pass through the circle center of the bottom surface of the work ring (1); one end of the first side edge (3) is located at a corresponding position of an inner sidewall of the work ring (1), and the other end of the first side edge (3) is oriented towards the outer side of the work ring (1) and deflected by an angle α to a direction opposite to the rotating direction of the work ring (1); and one end of the second side edge (4) is located at a corresponding position of the inner sidewall of the work ring (1), and the other end of the second side edge (4) is oriented towards the outer side of the work ring (1) and deflected by an angle θ to the rotating direction of the work ring (1), α being greater than θ.

4. The high-speed and high-efficiency drill bit according to claim 1, wherein two side surfaces of each discharge port (2) are provided in parallel, and the symmetrical centerline of the two side edges at the bottom of the discharge port (2) does not pass through the circle center of the bottom surface of the work ring (1); the two side surfaces of the discharge port (2) are inclined towards the rotating direction of the work ring (1) relative to the bottom surface of the work ring (1); and one end of each of the two side surfaces of the discharge port (2) is located at a corresponding position of the inner sidewall of the work ring (1), and the other end of the side surface is oriented towards an outer side of the work ring (1) and deflected by a preset angle to the rotating direction of the work ring (1).

5. The high-speed and high-efficiency drill bit according to claim 1, wherein the sidewall of the work ring (1) is provided with standby discharge ports (5) corresponding to the discharge ports (2), and each standby discharge port (5) is disposed above the discharge port (2) and configured to discharge scraps after axial abrasion of the work ring (1) exceeds the discharge port (2).

6. The high-speed and high-efficiency drill bit according to claim 5, wherein each discharge port (2) is a rounded structure at the top, and each standby discharge port (5) has rounded structures at its both bottom and top.

7. The high-speed and high-efficiency drill bit according to claim 6, wherein a plurality of discharge slots (6) is provided uniformly in the outer sidewall of the work ring (1) along a circumferential direction; and a lower end of each discharge slot (6) extends to the bottom of the work ring (1), and an upper end of the discharge slot (6) extends diagonally upwards.

8. The high-speed and high-efficiency drill bit according to claim 7, wherein the discharge slot (6) is in a spiral shape, and a spiral direction is the same as the rotating direction of the work ring (1).

9. The high-speed and high-efficiency drill bit according to claim 7, wherein the discharge ports (2) and the standby discharge ports (5) are provided at corresponding positions inside the discharge slots (6).

10. The high-speed and high-efficiency drill bit according to claim 7, wherein two side surfaces of each of the discharge ports (2) or the standby discharge ports (5) are sequentially a first side surface (9) and a second side surface (10) respectively along a rotating direction of the work ring (1); two side surfaces of each discharge slot (6) are sequentially a third side surface (11) and a fourth side surface (12) respectively along the rotating direction of the work ring (1); and the first side surface (9) overlaps with the third side surface (11), and the second side surface (10) is spaced from the fourth side surface (12).
